# EUROPEAN PATENT APPLICATION

(11) **EP 4 483 711 A1**
(43) Date of publication of application: **01.01.2025**
(21) Application number: 23759776.0
(22) Date of filing: 14.02.2023
(51) Int. Cl.: A01K 1/015

(54) **EXCRETA TREATMENT MATERIAL AND METHOD FOR PRODUCING SAME**

(30) Priority: 24.02.2022 JP 2022026278
(71) Applicant: Daiki Co. Ltd., Tokyo 1020072 (JP)
(72) Inventor: YOSHINAGA, Junji, Tokyo 107-0052 (JP)
(74) Representative: Müller-Boré & Partner Patentanwälte PartG mbB
(86) International application number: PCT/JP2023/004923
(87) International publication number: WO 2023/162774

(57) **Abstract**

Provided are an excrement treatment material in which urine is unlikely to stay on the surface of a grain, and a method for manufacturing the same. An excrement treatment material (1) is composed of a plurality of grains (10) having a hydrophobic property. The plurality of grains (10) include a grain (12) and a grain (14). The grain (14) has a smaller hydrophobicity rate than the grain (12).

## Description

### Technical Field

The present invention relates to an excrement treatment material and a method for manufacturing the same.

### Background Art

A conventional excrement treatment material is disclosed, for example, in Patent Document 1. The excrement treatment material disclosed in Patent Document 1 is composed of a plurality of grains that have a hydrophobic property (water-repellent property), and is laid in an animal toilet. The toilet is divided into an upper space and a lower space by a mesh sheet that allows urine to pass therethrough. The hydrophobic grains are disposed in the upper space. A liquid-absorbing sheet is disposed in the lower space. When an animal urinates, the urine passes through gaps between the hydrophobic grains, and arrives in the lower space through the mesh sheet. The urine having arrived in the lower space is absorbed by the liquid-absorbing sheet.

### Citation List

### Patent Document

Patent Document 1: JP 2005-110700 A

### Summary of Invention

### Technical Problem

The hydrophobic grains restrain a malodor generated from urine from leaking outside the toilet by guiding the urine downward in the toilet in this way. However, there is a problem that urine is likely to stay on the surface of the hydrophobic grain if the urine adheres to the grain. The urine staying on the surface of the grain causes a malodor from the urine to leak outside the toilet.

The present invention has been made in view of the above-described problem, and it is an object thereof to provide an excrement treatment material in which urine is unlikely to stay on the surface of a grain, and a method for manufacturing the same.

### Solution to Problem

An excrement treatment material according to the present invention is an excrement treatment material composed of a plurality of grains having a hydrophobic property, wherein the plurality of grains include a first grain, and a second grain that has a smaller hydrophobicity rate than the first grain.

In this excrement treatment material, the first and the second grains are provided. The hydrophobicity rate of the second grain is smaller than the hydrophobicity rate of the first grain. By reducing the hydrophobicity rate of the second grain in this way, urine becomes unlikely to stay not only on the surface of the second grain but also on the surface of the first grain. That is because urine adhering to the surface of the first grain is taken in the inside of the second grain around the first grain.

A method for manufacturing an excrement treatment material according to the present invention is a method for manufacturing an excrement treatment material composed of a plurality of grains having a hydrophobic property, and includes a grain forming step of forming the plurality of grains, wherein the grain forming step includes a first grain forming step of forming a first grain, and a second grain forming step of forming a second grain that has a smaller hydrophobicity rate than the first grain.

In this manufacturing method, the first and the second grains are formed. The hydrophobicity rate of the second grain is smaller than the hydrophobicity rate of the first grain. By reducing the hydrophobicity rate of the second grain in this way, urine becomes unlikely to stay not only on the surface of the second grain but also on the surface of the first grain in a manufactured excrement treatment material. That is because urine adhering to the surface of the first grain is taken in the inside of the second grain around the first grain.

### Advantageous Effects of Invention

According to the present invention, it is possible to implement an excrement treatment material in which urine is unlikely to stay on the surface of a grain, and a method for manufacturing the same.

### Brief Description of Drawings

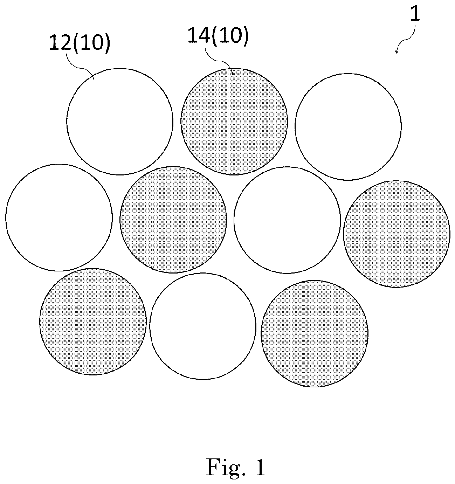

FIG. 1 is a schematic view showing an embodiment of an excrement treatment material according to the present invention.

### Description of Embodiments

Hereinafter, an embodiment of the present invention will be described in detail with reference to the drawings. In the description of the drawings, the same elements are given the same reference numerals, and a redundant description will be omitted.

FIG. 1 is a schematic view showing an embodiment of an excrement treatment material according to the present invention. An excrement treatment material 1 is an excrement treatment material used for treatment of excrement (mainly urine). The excrement treatment material 1 may be an excrement treatment material for animals used for treatment of excrement of animals such as cats or dogs, or may be an excrement treatment material for humans used for treatment of excrement of humans.

The excrement treatment material 1 is composed of a plurality of grains 10 for treating excrement. In the descriptions below, "plurality of grains 10" refers to all of the grains 10 constituting the excrement treatment material 1 unless otherwise indicated. The excrement treatment material 1 is used, for example, in a double-structured toilet (system toilet) that is divided into an upper space and a lower space by a partition member having a hole that allows urine to pass therethrough. In that case, the excrement treatment material 1 is used in a state in which the plurality of grains 10 are laid in the upper space (on the partition member) of the system toilet.

Each grain 10 has a hydrophobic property. That is, each grain 10 has the property of not absorbing liquid such as urine at all or, if any, hardly absorbing it. The grains 10 having the hydrophobic property require the hydrophobicity rate of 60 % or more measured by the following test. First, approximate 50 grams of the grains 10 (sample) are placed in a sieve with the inner diameter of 10 cm and the mesh size of 1 mm. An empty beaker is set under the sieve. Then, 30 ml of water is dripped on the sample over 10 seconds using a syringe with the inner diameter of its outer cylinder of 3 cm and the inner diameter of its cylinder tip of 4 mm (60 ml syringe manufactured by Terumo Corp.). After waiting 1 minute, the quantity of the water in the beaker is measured. The ratio of the measured water quantity with respect to the quantity of the dripped water (30 ml) shall be the hydrophobicity rate. That is, if the water quantity in the beaker is 18 ml or more, the hydrophobicity rate is 60 % or more, and therefore the grains 10 are found to have the hydrophobic property.

Each grain 10 has a granular shape. Examples of the granular shape include a sphere, column, and ellipsoid. Each grain 10 is composed of an uncovered granule. The particle diameter of each grain 10 is, for example, between 5 mm and 20 mm inclusive. As used herein, the particle diameter of the grain 10 is defined as the diameter of the minimum sphere that can include the grain 10. Each grain 10 contains an organic substance as its main material. As used herein, the main material of the grain 10 refers to the material that accounts for the highest weight ratio in the grain 10, out of one or more materials constituting the grain 10. Examples of the organic substance include papers, used tea leaves, plastics, and bean curd lees. Each grain 10 may be made only of an organic substance, or may be made of an organic substance and an inorganic substance.

The papers refer to a material composed mainly of pulp. Examples of the papers include, in addition to ordinary paper (paper powder), a vinyl chloride wallpaper classified product, photographic paper, release paper, fluff pulp, papermaking sludge, and pulp sludge. The vinyl chloride wallpaper classified product is obtained by removing part of polyvinyl chloride from vinyl chloride wallpaper containing paper and polyvinyl chloride. Examples of the plastics include, in addition to ordinary plastic, an aluminum deposited film, and a disposable diaper classified product (plastic obtained by classifying disposable diapers). The bean curd lees are preferably dried bean curd lees. These materials may be, or may not be subjected to hydrophobic treatment (water repellency treatment).

The material(s) constituting each grain 10 may be only one material, or two or more materials. In the former case, the main material described above is the only material constituting the grain 10. In the latter case, the grain 10 is made of a mixture of the main material and other material(s). Examples of the other material include gypsum and baking soda. Adding gypsum or baking soda can enhance the hydrophobic property of the grain 10. The quantity of gypsum or baking soda is, for example, 5 wt.% or more and less than 50 wt.% with respect to the entirety of the grain 10. Each grain 10 does not contain an adhesive material.

The plurality of grains 10 include a grain 12 (first grain) and a grain 14 (second grain). The grain 14 has a smaller hydrophobicity rate than the grain 12. When the hydrophobicity rate of the grain 12 is A % and the hydrophobicity rate of the grain 14 is B %, it is preferable that (A-B) ≥ 10 is satisfied, and it is more preferable that (A-B) ≥ 20 is satisfied. However, (A-B) ≤ 40 is satisfied. The hydrophobicity rate of the grain 12 is, for example, between 80 % and 100 % inclusive. The hydrophobicity rate of the grain 14 is, for example, between 60 % and 80 % inclusive.

A plurality of the grains 12 and a plurality of the grains 14 are provided. In the excrement treatment material 1, these grains 12, 14 are mixed. The number of the grains 14 is preferably between 30 % and 70 % inclusive, and more preferably between 40 % and 60 % inclusive of the total number of the grains 12 and the grains 14. The particle diameter of the grain 14 may be equal to or different from the particle diameter of the grain 12. Also, the grain 14 may be made of a material having the same composition as the grain 12, or may be made of a material having different composition from the grain 12. The plurality of grains 10 may include only the grains 12 and the grains 14, or may include a grain other than the grains 12 or the grains 14.

Next, an example of a method for manufacturing the excrement treatment material 1 will be described as an embodiment of a method for manufacturing an excrement treatment material according to the present invention. This manufacturing method includes a grain forming step.

The grain forming step is a step of forming the plurality of grains 10. The grain forming step includes a first and second grain forming steps. The first grain forming step is a step of forming the grain 12. In this step, a plurality of granules that will serve as the grains 12 are formed by granulating a first granulating material (material constituting the grains 12) with a granulation apparatus. An extrusion granulator, for example, can be used as the granulation apparatus. The granules may be subjected to hydrophobic treatment as needed. The hydrophobic treatment can be performed, for example, by coating the surface of each granule with a hydrophobic agent (water-repellent agent). Prior to the granulation, pretreatment such as pulverization, kneading, and adding water is performed on the first granulating material as needed. Also, after the granulation, posttreatment such as sieving (sizing), and drying is performed as needed. Thus, the plurality of grains 12 are obtained.

The second grain forming step is a step of forming the grain 14. In this step, a plurality of granules that will serve as the grains 14 are formed by granulating a second granulating material (material constituting the grains 14) with a granulation apparatus. The granules may be subjected to hydrophobic treatment as needed. Prior to the granulation, pretreatment such as pulverization, kneading, and adding water is performed on the second granulating material as needed. Also, after the granulation, posttreatment such as sieving (sizing), and drying is performed as needed. Thus, the plurality of grains 14 are obtained.

In the second grain forming step, the grains 14 are formed such that the hydrophobicity rate of each grain 14 is smaller than the hydrophobicity rate of each grain 12. For example, the hydrophobicity rate of the grain 14 can be smaller than the hydrophobicity rate of the grain 12 by using a material having a lower hydrophobic property (water-repellent property) than the first granulating material as the second granulating material. In the case where a material that enhances a hydrophobic property (e.g. gypsum or baking soda) is used, the hydrophobicity rate of the grain 14 can be smaller than the hydrophobicity rate of the grain 12 also by giving a difference in the content of the material between the grain 12 and the grain 14. Specifically, it is sufficient to make the weight ratio of the above-described material with respect to the grain 14 smaller than the weight ratio of the above-described material with respect to the grain 12.

The hydrophobicity rate of the grain 14 can be smaller than the hydrophobicity rate of the grain 12 also by making the pressure that is applied to the second granulating material during granulation of the grains 14 lower than the pressure that is applied to the first granulating material during granulation of the grains 12. That is because, if the pressure during granulation is lowered, crevices on the surface or in the inside of the granule increase, and thus moisture becomes more likely to enter into the granule. The pressure during granulation can be adjusted, for example, by changing the thickness of a die of the granulation apparatus. That is, the smaller the thickness of a die is, the lower the pressure during granulation can be.

Note that the first and second grain forming steps may be performed in arbitrary order. That is, both steps may be performed simultaneously in parallel, or either one step may be performed prior to the other step.

After that, the grains 12 formed in the first grain forming step and the grains 14 formed in the second grain forming step are mixed. At this time, it is preferable to mix the grains 12 and the grains 14 such that the number of the grains 14 is between 30 % and 70 % inclusive of the total number of the grains 12 and the grains 14. Also, it is more preferable to mix the grains 12 and the grains 14 such that the number of the grains 14 is between 40 % and 60 % inclusive of the total number of the grains 12 and the grains 14. Accordingly, the excrement treatment material 1 is obtained that is composed of the plurality of grains 10 including the grains 12 and the grains 14.

The effects of the present embodiment will be described. In the present embodiment, the grain 12 and the grain 14 are formed. The hydrophobicity rate of the grain 14 is smaller than the hydrophobicity rate of the grain 12. By reducing the hydrophobicity rate of the grain 14 in this way, urine becomes unlikely to stay not only on the surface of the grain 14 but also on the surface of the grain 12 in the excrement treatment material 1. That is because urine adhering to the surface of the grain 12 is taken in the inside of the grain 14 around the grain 12. Accordingly, the excrement treatment material 1 in which urine is unlikely to stay on the surfaces of the grains 10, and the method for manufacturing the same are implemented.

Moreover, the grain 12 and the grain 14 both have a hydrophobic property. By using hydrophobic type grains as both of the grain 12 and the grain 14 in this way, it is possible to enhance the water-permeability (ability of guiding urine downward in a toilet) of the excrement treatment material 1 as a whole, compared to a case where a non-hydrophobic type (water absorption type) grain is used as either one of the grain 12 or the grain 14.

By reducing the hydrophobicity rate (B %) of the grain 14, urine becomes more unlikely to stay on the surfaces of the grain 12 and the grain 14. On the other hand, by increasing the hydrophobicity rate (A %) of the grain 12, it is possible to enhance the water-permeability of the excrement treatment material 1 as a whole. From these viewpoints, it is preferable that (A-B) ≥ 10 is satisfied, and it is more preferable that (A-B) ≥ 20 is satisfied.

In order for urine to be unlikely to stay on the surfaces of the grain 12 and the grain 14, it is advantageous that the ratio of the grains 14 with respect to the entirety of the excrement treatment material 1 is large. From this viewpoint, the number of the grains 14 is preferably 30 % or more, and more preferably 40 % or more of the total number of the grains 12 and the grains 14. On the other hand, if the ratio of the grains 14 is too large, the water-permeability of the excrement treatment material 1 as a whole may become insufficient. From this viewpoint, the number of the grains 14 is preferably 70 % or less, and more preferably 60 % or less of the total number of the grains 12 and the grains 14.

Incidentally, in the case where the particle diameter of the grain 12 and the particle diameter of the grain 14 are different from each other, the grains having a larger particle diameter tend to be unevenly distributed in the upper layer and the grains having a smaller particle diameter tend to be unevenly distributed in the lower layer, when the plurality of grains 10 are laid in a toilet. That is because the grains having a smaller particle diameter can easily pass through gaps between the grains having a larger particle diameter and move downward. In contrast, in the case where the particle diameter of the grain 12 and the particle diameter of the grain 14 are equal to each other, it is advantageous for making the grain 12 and the grain 14 adjacent to each other because the grain 12 and the grain 14 become more likely to be evenly distributed. By making the grain 12 and the grain 14 adjacent to each other in this way, urine adhering to the surface of the grain 12 becomes more likely to be taken in the grain 14.

In the case where the grain 12 and the grain 14 are made of materials having the same composition, the material of the grain 12 (first granulating material) and the material of the grain 14 (second granulating material) can be used in common. This contributes to reduction in the manufacturing cost of the excrement treatment material 1.

In the case where the grain 12 and the grain 14 are made of materials having mutually different composition, it is possible to use a material having a relatively high hydrophobic property as the first granulating material and use a material having a relatively low hydrophobic property as the second granulating material. Thus, the grain 12 and the grain 14 having mutually different hydrophobicity rates can be easily implemented.

Each grain 10 does not contain an adhesive material. For this reason, stickiness of the surface of the grain 10 can be restrained. Thus, the grain 10 becomes less likely to adhere to the foot of an animal during excretion. There is a problem that the grains 10 adhering to the foot of an animal are scattered outside a toilet after excretion. Restraining stickiness of the surface of the grain 10 can make the problem unlikely to occur.

Each grain 10 is composed of an uncovered granule. Thus, the manufacturing cost of the excrement treatment material 1 can be reduced, because neither a coating material (material used for covering a granule) nor a coating step (step of covering a granule with a coating material) is required.

Each grain 10 contains an organic substance as its main material. Thus, it is possible to obtain the grains 10 suitable for being disposed of by incineration. In this case, the excrement treatment material 1 after use can be easily disposed of as burnable garbage, which therefore increases convenience for users. Particularly in the case where each grain 10 is made only of an organic substance, it is possible to obtain the grains 10 more suitable for being disposed of by incineration.

The present invention is not limited to the above-described embodiment, and various modifications can be made. In the above-described embodiment, an example is given in which each grain 10 is composed of an uncovered granule. However, each grain 10 may be composed of a granule in which the entirety or a part of the surface thereof is covered.

In the above-described embodiment, an example is given in which each grain 10 does not contain an adhesive material. However, each grain 10 may contain an adhesive material. Examples of the adhesive material include a water-absorbent polymer, starch, CMC (carboxymethyl cellulose), PVA (polyvinyl alcohol), and dextrin. As the water-absorbent polymer, for example, an acrylic water-absorbent polymer such as sodium polyacrylate can be used.

In the above-described embodiment, an example is given in which each grain 10 contains an organic substance as its main material. However, each grain 10 may contain an inorganic substance as its main material.

### List of Reference Numerals

- 1: Excrement Treatment Material
- 10: Grain
- 12: Grain (First Grain)
- 14: Grain (Second Grain)

## Claims

1. An excrement treatment material composed of a plurality of grains having a hydrophobic property,
wherein the plurality of grains include a first grain, and a second grain that has a smaller hydrophobicity rate than the first grain.

2. The excrement treatment material according to claim 1,
wherein (A-B) ≥ 10 is satisfied, when a hydrophobicity rate of the first grain is A % and the hydrophobicity rate of the second grain is B %.

3. The excrement treatment material according to claim 2,
wherein (A-B) ≥ 20 is satisfied.

4. The excrement treatment material according to any one of claims 1 to 3,
wherein a plurality of the first grains and a plurality of the second grains are provided.

5. The excrement treatment material according to claim 4,
wherein the number of the second grains is between 30 % and 70 % inclusive of the total number of the first and second grains.

6. The excrement treatment material according to claim 5,
wherein the number of the second grains is between 40 % and 60 % inclusive of the total number of the first and second grains.

7. The excrement treatment material according to any one of claims 1 to 6,
wherein a particle diameter of the second grain is equal to a particle diameter of the first grain.

8. The excrement treatment material according to any one of claims 1 to 7,
wherein the second grain is made of a material having the same composition as the first grain.

9. The excrement treatment material according to any one of claims 1 to 7,
wherein the second grain is made of a material having different composition from the first grain.

10. The excrement treatment material according to any one of claims 1 to 9,
wherein each of the grains is composed of an uncovered granule.

11. The excrement treatment material according to any one of claims 1 to 10,
wherein each of the grains does not contain an adhesive material.

12. The excrement treatment material according to any one of claims 1 to 11,
wherein each of the grains contains an organic substance as a main material.

13. The excrement treatment material according to claim 12,
wherein each of the grains is made only of an organic substance.

14. A method for manufacturing an excrement treatment material composed of a plurality of grains having a hydrophobic property, the method comprising:
a grain forming step of forming the plurality of grains,
wherein the grain forming step includes a first grain forming step of forming a first grain, and a second grain forming step of forming a second grain that has a smaller hydrophobicity rate than the first grain.

15. The method for manufacturing an excrement treatment material according to claim 14,
wherein in the second grain forming step, the second grain is formed such that (A-B) ≥ 10 is satisfied, when a hydrophobicity rate of the first grain is A % and the hydrophobicity rate of the second grain is B %.

16. The method for manufacturing an excrement treatment material according to claim 15,
wherein in the second grain forming step, the second grain is formed such that (A-B) ≥ 20 is satisfied.

17. The method for manufacturing an excrement treatment material according to any one of claims 14 to 16,
wherein in the first grain forming step, a plurality of the first grains are formed, and
in the second grain forming step, a plurality of the second grains are formed.

18. The method for manufacturing an excrement treatment material according to claim 17,
wherein in the grain forming step, the first grains and the second grains are mixed such that the number of the second grains is between 30 % and 70 % inclusive of the total number of the first and second grains.

19. The method for manufacturing an excrement treatment material according to claim 18,
wherein in the grain forming step, the first grains and the second grains are mixed such that the number of the second grains is between 40 % and 60 % inclusive of the total number of the first and second grains.

20. The method for manufacturing an excrement treatment material according to any one of claims 14 to 19,
wherein in the second grain forming step, the second grain is formed such that a particle diameter of the second grain is equal to a particle diameter of the first grain.

21. The method for manufacturing an excrement treatment material according to any one of claims 14 to 20,
wherein in the second grain forming step, the second grain that is made of a material having the same composition as the first grain is formed.

22. The method for manufacturing an excrement treatment material according to any one of claims 14 to 20,
wherein in the second grain forming step, the second grain that is made of a material having different composition from the first grain is formed.

23. The method for manufacturing an excrement treatment material according to any one of claims 14 to 22,
wherein in the grain forming step, the plurality of grains that are composed of an uncovered granule are formed.

24. The method for manufacturing an excrement treatment material according to any one of claims 14 to 23,
wherein in the grain forming step, the plurality of grains that do not contain an adhesive material are formed.

25. The method for manufacturing an excrement treatment material according to any one of claims 14 to 24,
wherein in the grain forming step, the plurality of grains that contain an organic substance as a main material are formed.

26. The method for manufacturing an excrement treatment material according to claim 25,
wherein in the grain forming step, the plurality of grains that are made only of an organic substance are formed.
